# EUROPEAN PATENT APPLICATION

(11) **EP 4 447 218 A1**
(43) Date of publication of application: **16.10.2024**
(21) Application number: 24160318.2
(22) Date of filing: 28.02.2024
(51) Int. Cl.: H01M 50/528, H01M 50/507, H01M 50/503, H01M 50/249, H01M 50/502, H01M 50/213, H01M 50/271

(54) **RECHARGEABLE BATTERY MODULE**

(30) Priority: 14.04.2023 KR 20230049497
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A rechargeable battery module includes a holder configured to accommodate battery cells spaced in from each other in a first direction and a second direction crossing the first direction; tabs configured to electrically connect the battery cells to each other, at least one of the tabs having an inner planar portion and an inner lateral portion bent from the inner planar portion and fixed to a side of the holder; and busbars configured to connect the tabs to a battery management system. At least one of the busbars has an outer lateral portion connected to the inner lateral portion of the tab and an outer planar portion bent from the outer lateral portion and spaced from the inner planar portion. The holder includes a rib configured to fix at least one of the inner lateral portion of the tab and the outer lateral portion of the busbar.

## Description

### BACKGROUND

### 1. Field

Aspects of embodiments of the present disclosure relate to a rechargeable battery module. More particularly, the present disclosure relates to a rechargeable battery module for connecting tabs electrically connecting battery cells received in a holder to a battery management system with a busbar.

### 2. Description of the Related Art

A rechargeable battery is designed to be repeatedly charged and discharged, different from a primary cell. A small rechargeable battery is used for portable, small electronic devices, such as a mobile phone, a laptop computer, or a camcorder. A large capacity and high density rechargeable battery is used to store motor driving power or energy for hybrid vehicles and electric vehicles.

The rechargeable battery may be used as a rechargeable battery module including battery cells coupled together in series and/or in parallel, for example, to drive a motor of a hybrid vehicle. For example, the rechargeable battery module is formed by connecting electrode terminals of the battery cells, in number and arrangement such that a desired power amount is achieved to provide a relatively high power rechargeable battery module (e.g., an electric vehicle).

For example, the rechargeable battery module includes core packs. The core packs include battery cells coupled together in series and/or in parallel, and the rechargeable battery module is formed by receiving (or accommodating) the core packs in a case.

The rechargeable battery module has a high voltage and current sufficient for various use conditions of consumers. To this end, it includes tabs for connecting battery cells and a busbar for connecting the tabs and a battery management system. The busbar should be placed at a desired position. To set the positions of the tab and the busbar and to fix the busbar to the tab, a guide boss and a guide rib may be provided to the holder, and screws or bolts may be used therewith.

If the rechargeable battery module is formed by disposing core packs near or together with each other in a horizontal direction to provide large capacity, a space between the core packs is narrow so it can be difficult to form the guide boss and the guide rib on the holder, and the screws or the bolt may not be used.

### SUMMARY

Embodiments of the present disclosure provide a rechargeable battery module for maintaining adherence between a tab and a busbar and to stably fix the tab and the busbar.

Embodiments of the present disclosure also provide a rechargeable battery module for maintaining adherence between a tab and a busbar and stably fixing the tab and the busbar when a space between adjacent core packs is relatively narrow.

A rechargeable battery module, according to an embodiment of the present disclosure, includes or comprises: a holder configured to receive or accommodate battery cells spaced from each other in a first direction and a second direction crossing the first direction; tabs configured to electrically connect the battery cells to each other, at least one of the tabs having an inner planar portion and an inner lateral portion bent from the inner planar portion and fixed to a side of the holder; and busbars configured to connect the tabs to a battery management system. At least one of the busbars has an outer lateral portion connected to the inner lateral portion of the tab and an outer planar portion bent from the outer lateral portion and spaced from the inner planar portion, and the holder includes a rib configured to fix at least one of the inner lateral portion of the tab and the outer lateral portion of the busbar.

The rib may include: an internal rib member open toward the inner lateral portion of the at least one of the tabs and combined to the inner lateral portion; and an external rib member open toward the outer lateral portion of the at least one of the busbars and combined to the outer lateral portion.

The internal rib member and the external rib member may be independently spaced from each other in the first direction and may be integrally formed on a side of the holder.

The internal rib member may form an internal first gap on the side of the holder, and the external rib member may form a second gap that overlaps and is greater than the first gap.

The tabs may include: a first tab member having an inner planar portion on a plane of the holder and configured to connect the battery cells to each other and an inner lateral portion bent from the inner planar portion and arranged on a side of the holder; and a second tab member on an upper side and a lower side of the holder and configured to connect the battery cells. The inner lateral portion of the first tab member may be combined and fixed to the internal rib member.

The internal rib member may be formed or arranged on the side of the holder and may have a first length that is less than a length of the inner lateral portion and may combine and fix part of, or an entire length of, the inner lateral portion.

The busbars may include a first busbar member and a second busbar member. The second busbar member may have: an outer planar portion facing the inner planar portion of the first tab member; and an outer lateral portion bent from the outer planar portion and facing the inner lateral portion of the first tab member to be connected to the same. The outer lateral portion of the second busbar member may be combined and fixed to the external rib member.

The outer lateral portion may be combined to the external rib member and may be adhered to the inner lateral portion to apply a pressure to a surface thereof.

The external rib member may correspond to a length of the outer lateral portion on a side of the holder and may have a second length that is greater than the first length.

A portion of the inner lateral portion that corresponds to the external rib member may be combined and fixed by the outer lateral portion and the external rib member.

The external rib member may correspond to the length of the outer lateral portion on the side of the holder. It may be formed to be single or multiple.

The holder may further include: a first holder configured to receive or accommodate one side of the battery cells that are spaced in the first direction and the second direction; and a second holder configured to receive or accommodate an opposite side of the battery cells. The first holder and the second holder may be combined in a snap fit structure or configuration.

The rib may be formed or located on one side of one of the first holder and the second holder.

The rechargeable battery module may further include: a case receiving or accommodating a lower side of the holder; and a cover covering an upper side of the holder. The cover may include a rib facing and corresponding to the battery cells.

The rib may have a regular hexagon pattern and it may be repeatedly disposed, e.g. in a repeating pattern, in the first direction and the second direction.

The rechargeable battery module, according to embodiments of the present disclosure, includes a holder having a rib to fix the inner lateral portion of the tab or the outer lateral portion of the busbar, thereby maintaining adherence between the tab and the busbar and stably fixing the tab and the busbar.

The rechargeable battery module, according to embodiments of the present disclosure, fixes the inner lateral portion of the tab and the outer lateral portion of the busbar with the rib of the holder such that, if the lateral space of, or near, the rechargeable battery module is relatively narrow or the space among the adjacent core packs is relatively narrow (relatively small), the adherence between the tab and the busbar can be maintained and the tab and the busbar may be stably fixed.

At least some of the above and other features of the invention are set out in the claims.

### BRIEF DESCRIPTION OF THE DRAWINGS

The present disclosure will now be described more fully hereinafter with reference to the accompanying drawings, in which embodiments of the present disclosure are shown purely by way of example. As those skilled in the art would realize, the described embodiments may be modified in various different ways, all without departing from the scope of the present disclosure. Thus, the drawings and description are to be regarded as illustrative in nature and not restrictive.
FIG. 1 is a perspective view of a rechargeable battery module according to an embodiment of the present disclosure.
FIG. 2 is an exploded perspective view of the rechargeable battery module shown in FIG. 1.
FIG. 3 is a cutaway perspective view taken along the line III-III of FIG. 1.
FIG. 4 is a cross-sectional perspective view taken along the line IV-IV of FIG. 1.
FIG. 5 is a cross-sectional perspective view taken along the line V-V of FIG. 1.
FIG. 6 is a top plan view of the rechargeable battery module shown in FIG. 1.
FIG. 7 is a top plan view of a first holder of the rechargeable battery module shown in FIG. 1.
FIG. 8 is a perspective view of a rechargeable battery module according to another embodiment of the present disclosure.
FIG. 9 is a perspective view of a rechargeable battery module according to another embodiment of the present disclosure.
FIG. 10 is another perspective view of the rechargeable battery module shown in FIG. 9.
FIG. 11 is a cross-sectional view taken along the line IX-IX of FIG. 10.

### DETAILED DESCRIPTION

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

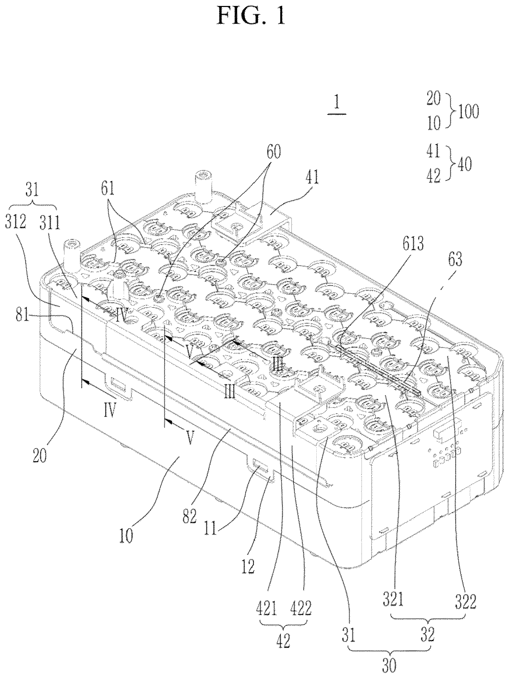

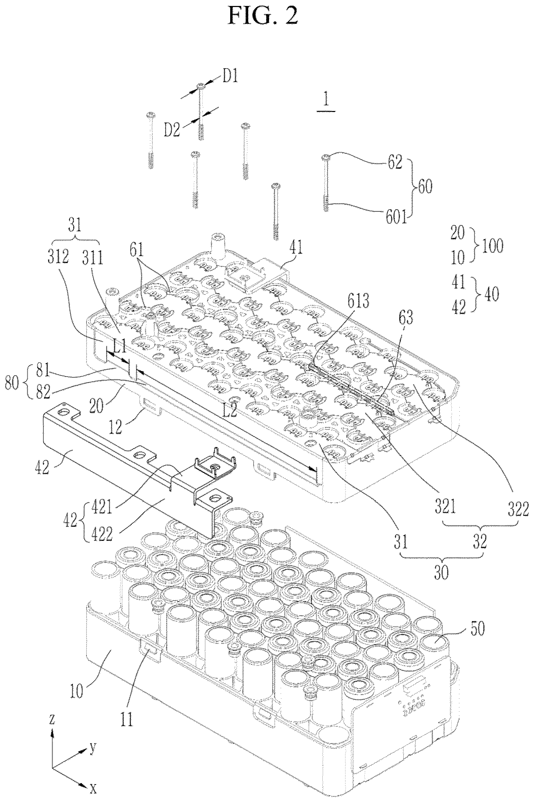

FIG. 1 is a perspective view of a rechargeable battery module according to an embodiment of the present disclosure, and FIG. 2 is an exploded perspective view of the rechargeable battery module shown in FIG. 1.

Referring to FIG. 1 and FIG. 2, the rechargeable battery module 1 may include a holder 100, tabs 30, and busbars 40.

For example, the holder 100 may include a first holder 10 and a second holder 20. The first holder 10 may form a bottom holder of the rechargeable battery module 1, the second holder 20 may form a top holder. The tabs 30 may be formed to be nickel tabs, thus comprising or including a nickel material.

The first holder 10 and the second holder 20 may form a honeycomb structure therein to receive battery cells 50 that are spaced in (e.g., arranged in) a first direction (e.g., the x-axis direction) and a second direction (e.g., the y-axis direction) crossing (or traversing) the first direction. The first holder 10 and the second holder 20 may be combined to each other by a fastening member - the combination member 60, in a third direction (e.g., the z-axis direction) crossing (or traversing) the second direction.

Referring to FIG. 1 and FIG. 2, the first holder 10 may receive a lower side (or lower end) of the battery cells 50, and the second holder 20 may receive an upper side (or upper end) of the battery cells 50. In this state, the first and second holders 10 and 20 are fastened together by the combination member 60.

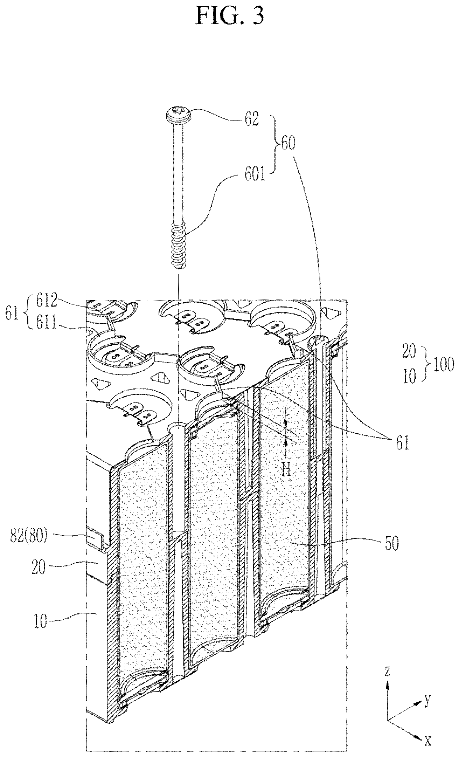

FIG. 3 is a partial cutaway perspective view taken along the line III-III of FIG. 1 show a configuration for fastening the first holder 10 and the second holder 20 with the combination member 60. Referring to FIG. 1 to FIG. 3, the first holder 10 and the second holder 20 may be combined in (e.g., may include to be connected together by) a snap fit structure including a protrusion 11 installed on an external side of the first holder 10 and a combiner 12 installed on an external side of the second holder 20 corresponding to (e.g., aligned with) the protrusion 11.

For example, the combination member 60 may have a column structure that is longer than the second holder 10 in height and may have a screw portion 601 and a head portion 62 at respective ends (e.g., opposite ends) of the column. The screw portion 601 may be formed as a screw at one end of the column to penetrate (or extend through or pass through) the second holder 20 and may be screw-combined to the first holder 10 (e.g., the first holder 10 may have threads corresponding to the threads of the screw portion 601). The head portion 62 may be formed on another side of the column to have a diameter D 1 that is greater than a diameter D2 of the column and may be disposed on (e.g., may contact) an upper side of the second holder 20. The head portion 62 may have a driver groove.

The tabs 30 may electrically connect the battery cells 50 in parallel and in series, and may, for example, include a first tab member 31 and a second tab member 32. The tabs 30 may each be formed to be a nickel tab including a nickel material. The busbars 40 may connect the tabs 30 to the battery management system (BMS) and may, for example, include a first busbar member 41 and a second busbar member 42.

The first tab member 31 may include an inner planar portion 311 and an inner lateral portion 312 bent from (i.e. relative to) the inner planar portion 311 and fixed to a side of the holder 100. The inner planar portion 311 may be disposed on a plane of the holder 100 to connect the battery cells 50 together, and the inner lateral portion 312 may be bent from the inner planar portion 311 and disposed on a side of the holder 100. The second tab member 32 may be disposed on an upper side and a lower side of the holder 100 to connect the battery cells 50 together.

The second busbar member 42 may include an outer lateral portion 422 connected to the inner lateral portion 312 of the first tab member 31, and an outer planar portion 421 bent from the outer lateral portion 422 and spaced from the inner planar portion 311. The outer planar portion 421 may face the inner planar portion 311 of the first tab member 31, and the outer lateral portion 422 may face the inner lateral portion 312 of the first tab member 31 to be connected thereto.

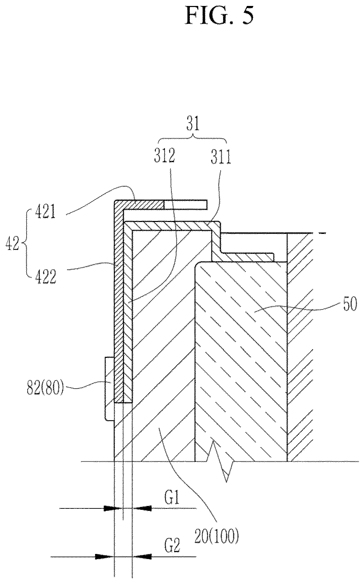

Referring to FIG. 1, FIG. 2, FIG. 4, and FIG. 5, the holder 100 may include a rib 80 for fixing at least one of the inner lateral portion 312 of the first tab member 31 and the outer lateral portion 422 of the second busbar member 42.

For example, the rib 80 may include an internal rib member 81 and an external rib member 82. The internal rib member 81 may be open toward the inner lateral portion 312 of the first tab member 31 and may be combined to the inner lateral portion 312. In this configuration, the internal rib member 81 may adhere the inner lateral portion 312 to the holder 100. To this end, the internal rib member 81 may form a first gap G1 inside (e.g., facing) a side of the holder 100.

Further, the internal rib member 81 may be formed to have a first length L1 on a side of the holder 100 that is less than a length of the inner lateral portion 312 and may combine and fix part of (or some of) the entire length of the inner lateral portion 312.

The external rib member 82 may be open toward the outer lateral portion 422 of the second busbar member 42 and may be combined to the outer lateral portion 422. The external rib member 82 may fix (e.g., adhere) the outer lateral portion 422 to the holder 100. Because the inner lateral portion 312 is disposed between the outer lateral portion 422 and the holder 100, the external rib member 82 may further adhere the inner lateral portion 312 to the outer lateral portion 422. For example, the outer lateral portion 422 may be combined to the external rib member 82 and may be fixed (e.g., adhered) to the inner lateral portion 312 and a pressure may be applied to a surface.

The external rib member 82 may form a second gap G2 outside a side of the holder 100. The second gap G2 may include the first gap G1 and may be formed to be greater than the first gap G1 to receive the inner lateral portion 312 and the outer lateral portion 422 in an overlapping way (e.g., in an overlapping arrangement). Hence, adherence of the tab 30 and the busbar 40 may be maintained, and the tab 30 and the busbar 40 may be stably fixed.

Further, the internal rib member 81 and the external rib member 82 may be independently spaced from each other in the first direction (e.g., the x-axis direction) and may be integrally formed on a side of the holder 100. An external surface of the internal rib member 81 forms a plane with an external surface of a side of the holder 100, and the external rib member 82 may protrude farther from the external surface of the side of the holder 100.

Therefore, if a lateral space around the rechargeable battery module 1 is narrow or at least one rechargeable battery module 1 is continuously installed on an xy-plane and a lateral space of the rechargeable battery modules 1 is relatively narrow, the internal rib member 81 and the external rib member 82 may maintain the adherence of the tab 30 and the busbar 40 and may stably fix the tab 30 and the busbar 40.

The external rib member 82 may correspond to the length of the outer lateral portion 422 on a side of the holder 100 and may be formed to have a second length L2 that is greater than the first length L1. The external rib member 82 may stably fix the inner lateral portion 312 of the first tab member 31 and the outer lateral portion 422 of the second busbar member 42 and may make the electrical connection firm, i.e. ensure that the electrical connection together is robust. Therefore, the inner lateral portion 312 may be partly combined and fixed to the internal rib member 81, and a portion of the inner lateral portion 312 that corresponds to the external rib member 82 may be combined and fixed to the outer lateral portion 422 by the external rib member 82.

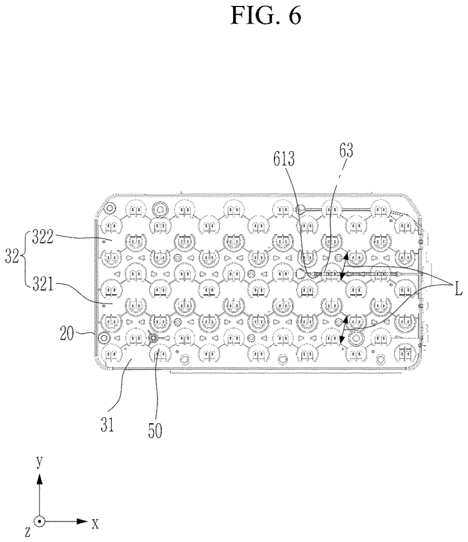

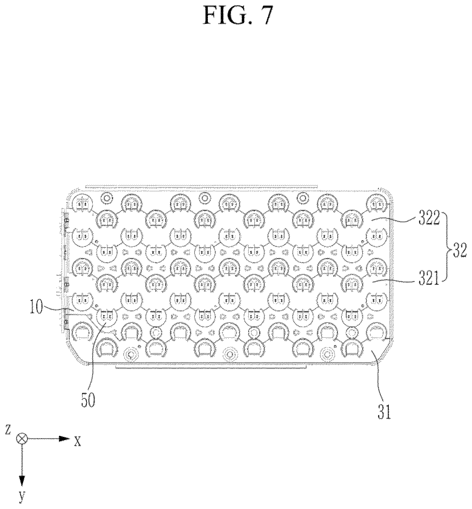

An electrical connection between the tabs 30 and the battery cells 50 will now be described with reference to FIG. 6 and FIG. 7.

FIG. 6 is a top plan view showing a connection and disposition relationship of the battery cells 50 and the tabs 30 at an upper side of the second holder 20 of the rechargeable battery module 1 shown in FIG. 1, and FIG. 7 is a top plan view showing a connection and disposition relationship of the battery cells 50 and the tabs 30 on a lower side of the first holder 10 of the rechargeable battery module 1 shown in FIG. 1. Referring to FIG. 1, FIG. 2, FIG. 6, and FIG. 7, regarding the rechargeable battery module 1, the tabs 30 may allow multiple connections of the battery cells 50 in parallel/in series.

The first tab member 31 may be bent to be disposed on an upper side and a lateral side of the second holder 20 and may be bent to be disposed on a lower side and a lateral side of the first holder 10 to connect the battery cells 50 in parallel.

The first tab member 31, which is a bent tab member, may include the inner planar portion 311 connected to the battery cells 50 and the inner lateral portion 312 bent from the inner planar portion 311 and disposed on lateral sides of the first and second holders 10 and 20.

The second tab members 321 and 322 may be disposed on an upper side of the second holder 20 and a lower side of the first holder 10 and may allow multiple connections of the battery cells 50 in parallel and in series (e.g., they may connect multiple battery cells 50 together in parallel and in series).

For example, the first tab member 31 and the second tab members 321 and 322 may electrically connect the battery cells 50 in parallel and in series in the first direction (e.g., the x-axis direction). The first tab member 31 and the second tab members 321 and 322 extend in the first direction (e.g., the x-axis direction) and are spaced from each other in the second direction (e.g., the y-axis direction).

The first tab member 31 and the second tab members 321 and 322 may be sequentially disposed (e.g., sequentially arranged) on the upper side of the second holder 20 in the second direction and may be sequentially disposed on the lower side of the first holder 10 in a reverse direction of the second direction to form a symmetric structure to electrically connect the battery cells 50 in parallel and in series.

For ease of description, a structure of the tabs 30 on the upper side of the second holder 20 and a structure of the tabs 30 on the lower side of the first holder 10 will now be described. The first tab member 31 may electrically connect some of the battery cells 50 in parallel in the first direction. The second tab members 321 and 322 may electrically connect others of the battery cells 50 in parallel in the first direction. The first and second tab members 31 and 32 may be disposed in a symmetric structure on the upper side of the second holder 20 and the lower side of the first holder 10 so the parallel connection is changed to the series connection.

For example, when one first tab member 31 is provided to have a positive polarity or a negative polarity on the upper side of the second holder 20 or the lower side of the first holder 10, two second tab members 321 and 322 are provided such the second tab member 321 disposed near the first tab member 31 has a different polarity, and the second tab members 321 and 322 may have different polarities.

For example, when the first tab member 31 has a positive polarity, the second tab member 321 disposed near the first tab member 31 may have a negative polarity, and the other second tab member 322 may have a positive polarity. When the first tab member 31 has a negative polarity, the second tab member 321 disposed near the first tab member 31 may have a positive polarity, and the other second tab member 322 may have a negative polarity.

Referring to FIG. 1 to FIG. 3, at least one of the first holder 10 and the second holder 20 includes a rib 61 protruding in the third direction. In the illustrated embodiment, the rib 61 is provided on the second holder 20 disposed on the upper portion of the rechargeable battery module 1 as an example.

The rib 61 is respectively provided between the first tab member 31 and the second tab member 32 having different polarities and between the two second tab members 321 and 322. One rib 61 from among the ribs 61 may be disposed between the first tab member 31 and the second tab member 32 having different polarities. The other rib 61 may be disposed between the second tab member 321 and the second tab member 322 having different polarities.

The rib 61 may have a curve (e.g., a curved portion) 611 and a straight line (e.g., a straight line portion) 612. The curve 611 is formed in a curved line shape according to (e.g., around) a shape of a receiving hole in the second holder 20 for receiving a cylindrical battery cell 50. The straight line 612 connects two neighboring curves 611, i.e. one curve 611 to another curve 611 in a straight line shape at a shortest distance.

The rib 61 may have a height H (see, e.g., FIG. 3) protruding in the third direction, and the height H may be greater than about 1/2 of a size of the diameter D1 (see, e.g., FIG. 2) of the head portion 62 minus the diameter D2 of the column (e.g., H > (D1-D2)/2).

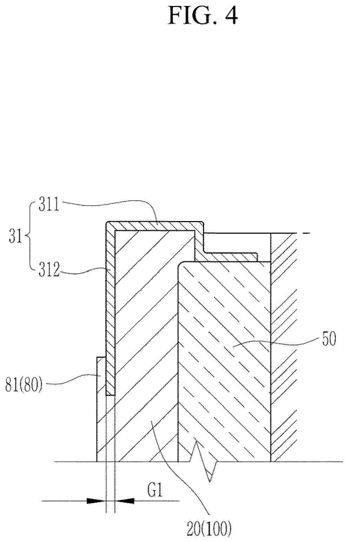

Therefore, if the combination member 60 falls on the rib 61 (see, e.g., FIG. 4) and if the screw portion 601 contacts a portion of the first tab member 31, the head portion 62 does not contact the neighboring second tab member 32. Hence, the first and second tab members 31 and 32 are not unintentionally or accidentally connected by the combination member 60.

Also, if the combination member 60 falls on the rib 61 and if the screw portion 601 contacts the second tab member 321 on one side, the head portion 62 does not contact the other neighboring second tab member 322. Hence, the second tab members 321 and 322 are not unintentionally or accidentally connected by the combination member 60.

The combination member 60 may be formed to be longer than a least spaced distance (e.g., a narrowest distance) (L) (see, e.g., FIG. 6) between the first tab member 31 and the second tab member 32 neighboring each other in the second direction (e.g., the y-axis direction) and a least spaced distance (L) between the second tab members 321 and 322.

If the combination member 60 is formed to be longer than the least spaced distances (L), one side is lifted to be spaced from the tabs 30 by the rib 61 so that the tabs 30 are not unintentionally or accidentally connected by the combination member 60.

Various other embodiments of the present disclosure will now be described. The same configuration(s) as in the above-described embodiment will not be described again or will be only briefly described, while different configurations therebetween will now be primarily described.

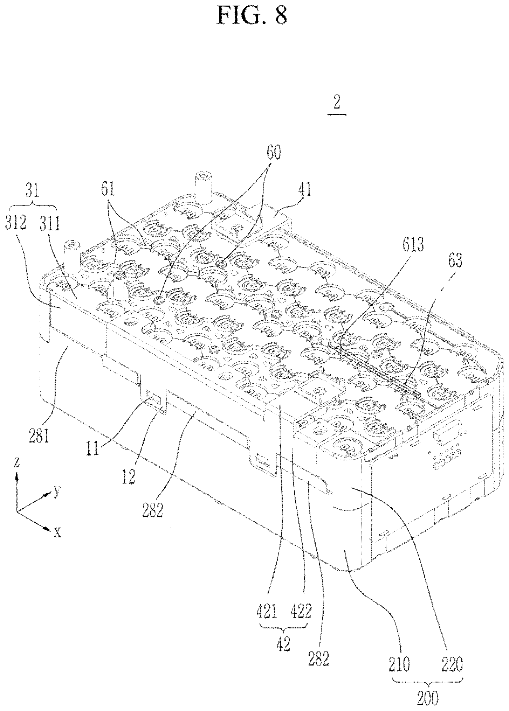

FIG. 8 is a perspective view of a rechargeable battery module according to another embodiment of the present disclosure. Referring to FIG. 8, in the rechargeable battery module 2 according to this embodiment, external rib members 282 are formed corresponding to the length of the outer lateral portion 422 of the second busbar member 42 on a side of the holder 200.

Referring to FIG. 1 and FIG. 2, regarding the rechargeable battery module 1 described above, the external rib member 82 may be formed corresponding to the length of the outer lateral portion 422 of the second busbar member 42 on a side of the holder 100.

In the rechargeable battery module 1 described above, the internal and external rib members 81 and 82 may be formed on the second holder 20, that is, a top holder. For example, the internal and external rib members 81 and 82 may be formed by an injection molding of the second holder 20.

In the rechargeable battery module 2, according to the present embodiment, the external rib members 281 and 282 may be formed on the first holder 210, that is, a bottom holder. For example, the internal and external rib members 281 and 282 may be formed by an injection molding of the first holder 210.

In the rechargeable battery module 2, the internal and external rib members 281 and 282 may be formed to avoid (e.g., to be offset from) the protrusion 11 of the first holder 210 and the combiner 12 of the second holder 20. In the rechargeable battery module 1, the internal and external rib members 81 and 82 may be formed on the second holder 20 depending on a use case of the rechargeable battery module 1. In the rechargeable battery module 2, the internal and external rib members 281 and 282 may be formed on the first holder 210 depending on a use case of the rechargeable battery module 2.

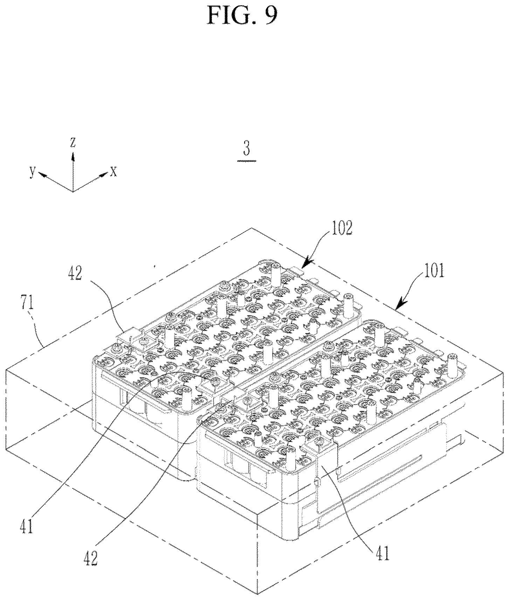

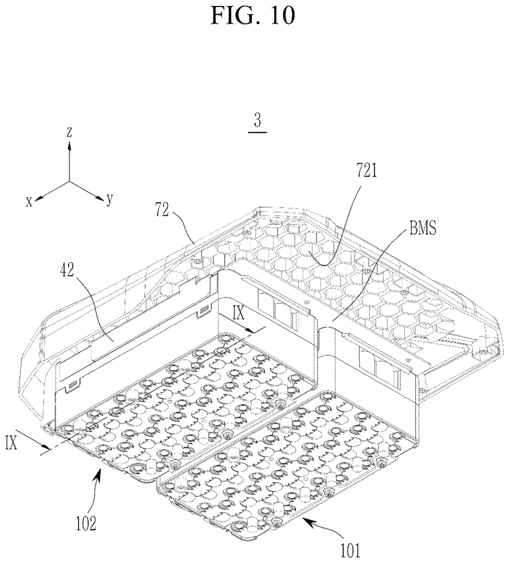

FIG. 9 is a perspective view of a rechargeable battery module according to another embodiment of the present disclosure, and FIG. 10 is another perspective view of the rechargeable battery module shown in FIG. 9. This may be set to be a core pack and thus is shown to be combined to, or with, a case 71 and a cover 72.

Referring to FIG. 9 and FIG. 10, the rechargeable battery module 3, according to the present embodiment, includes (e.g., may be formed by installing) two core packs 101 and 102 in a case 71, and covering the same with a cover 72. The case 71 protects the core packs 101 and 102. The respective core packs 101 and 102 may each include a plurality of connections of the battery cells 50 in series and in parallel and may be formed with (e.g., may be) the rechargeable battery module 1 or the rechargeable battery module 2 as described above.

When the core packs 101 and 102 include a plurality of connections of the battery cells 50 in series and in parallel, the rechargeable battery module 3 may output a high voltage and a high current such that it may need strong durability with respect to external impacts.

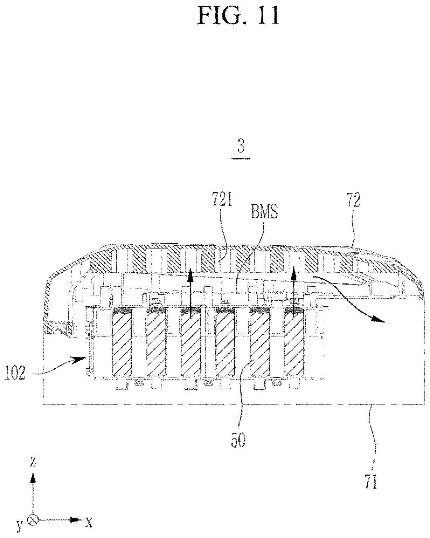

FIG. 11 is a cross-sectional view taken along the line IX-IX of FIG. 10. In the rechargeable battery module 3, the case 71 receives the first holder 10, and the cover 72 covers the second holder 20. The cover 72 may include a rib 721 facing the battery cells 50 accommodated therein and corresponding to the same. The rib 721 may have a height in the third direction (e.g., the z direction) and may be formed to have a regular hexagon pattern in the first direction and the second direction (e.g., on the xy-plane).

The rib 721 increases the strength of the cover 72, thereby providing strong durability against external impacts. Further, the rib 721 may easily discharge gas through a space formed between an internal side (or internal surface) of the cover 72 and the second holder 20 in the situation of an ignition event, such as a thermal runaway of one or more of the battery cells 50, thereby preventing a fire from spreading to other, neighboring battery cells 50.

Referring to FIG. 9 and FIG. 10, the busbars 40 may connect the tabs 30 to a battery management system (BMS) (see, e.g., FIG. 11). The core packs 101 and 102 may each have the first and second busbar members 41 and 42.

Referring to the adjacent core packs 101 and 102, the second busbar member 42 in the core pack 101 and 102 on one side may be connected to the first tab member 31, that is, a bent tab member, on the upper side of the second holder 20 and may be connected to the battery management system (BMS) on another side. The first busbar member 41 may be connected to the second tab member 322, that is, a plate-type tab member, on the upper side of the second holder 20 and may be connected to the battery management system (BMS) on another side.

While this disclosure has been described above in connection with what is presently considered to be practical embodiments, it is to be understood that the disclosure is not limited to the disclosed embodiments. On the contrary, the present disclosure is intended to cover various modifications and equivalent arrangements included within the scope of the appended claims and their equivalents.

**Description of Some Reference Symbols**

| | | | | |
|---|---|---|---|---|
| 1, 2, 3: | rechargeable battery module | | 10: | first holder |
| 11: | protrusion | | 12: | combiner |
| 20: | second holder | 30: | tab | |
| 31: | first tab member | | 32, 321, 322: | second tab member |
| 40: | busbar | 41: | first busbar member | |
| 42: | second busbar member | | 50: | battery cell |
| 60: | combination member | 61: | rib | |
| 62: | head portion | | 71: | case |
| 72: | cover | | 80: | rib |
| 81: | internal rib member | | 82: | external rib member |
| 100, 200: | holder | | 101, 102: | core pack |
| 210: | first holder | | 220: | second holder |
| 281: | internal rib member | 282: | external rib member | |
| 311: | inner planar portion | 312: | inner lateral portion | |
| 421: | outer planar portion | 422: | outer lateral portion | |
| 601: | screw portion | 611: | curve | |
| 612: | straight line | | 721: | rib |
| BMS: | battery management system | | D1, D2: | diameter |
| G1: | first gap | | G2: | second gap |
| H: | height | | L: | least spaced distance |
| L1: | first length | | L2: | second length |

Embodiments are set out in the following clauses:
Clause 1. A rechargeable battery module comprising:
   a holder for receiving battery cells spaced in a second direction traversing a first direction;
   tabs for electrically connecting the battery cells; and
      busbars for connecting the tabs to a battery management system (BMS),
      wherein at least one of the tabs comprises an inner planar portion and an inner lateral portion bent from the inner planar portion and fixed to a side of the holder,
      at least one of the busbars comprises an outer lateral portion connected to the inner lateral portion of the tab and an outer planar portion bent from the outer lateral portion and spaced from the inner planar portion, and
      the holder comprises a rib for fixing at least one of the inner lateral portion of the tab and the outer lateral portion of the busbar.
Clause 2. The rechargeable battery module as defined in clause 1, wherein
   the rib comprises:
   an internal rib member opened toward the inner lateral portion of the tab and combined to the inner lateral portion; and
   an external rib member opened toward the outer lateral portion of the busbar and combined to the outer lateral portion.
Clause 3. The rechargeable battery module as defined in clause 2, wherein
   the internal rib member and the external rib member are independently spaced from each other in the first direction and are integrally formed on a side of the holder.
Clause 4. The rechargeable battery module as defined in clause 3, wherein
   the internal rib member internally forms a first gap on the side of the holder, and
   the external rib member externally comprises the first gap on the side of the holder and forms a second gap that is greater than the first gap.
Clause 5. The rechargeable battery module as defined in any one of clauses 2 to 4, wherein
   the tabs comprises:
   a first tab member includingan inner planar portion disposed on a plane of the holder and connecting the battery cells and an inner lateral portion bent from the inner planar portion and disposed on a side of the holder; and
   a second tab member disposed on an upper side and a lower side of the holder and connecting the battery cells, and
   the inner lateral portion of the first tab member is combined and fixed to the internal rib member.
Clause 6. The rechargeable battery module as defined in clause 5, wherein
   the internal rib member is formed on the side of the holder to have a first length that is less than a length of the inner lateral portion, and combines and fixes part of an entire length of the inner lateral portion.
Clause 7. The rechargeable battery module as defined in clause 6, wherein
   the busbars comprises a first busbar member and a second busbar member,
   the second busbar member comprises:
      an outer planar portion facing the inner planar portion of the first tab member; and
      an outer lateral portion bent from the outer planar portion and facing the inner lateral portion of the first tab member to be connected to the same, and
      the outer lateral portion of the second busbar member is combined and fixed to the external rib member.
Clause 8. The rechargeable battery module as defined in clause 7, wherein
   the outer lateral portion is combined to the external rib member and is adhered to the inner lateral portion to apply a pressure to a surface.
Clause 9. The rechargeable battery module as defined in clause 8, wherein
   the external rib member corresponds to a length of the outer lateral portion on a side of the holder and is formed to have a second length that is greater than the first length.
Clause 10. The rechargeable battery module as defined in clause 9, wherein
   a portion that corresponds to the external rib member in the inner lateral portion is combined and fixed by the outer lateral portion and the external rib member.
Clause 11. The rechargeable battery module as defined in clause 8, clause 9 or clause 10, wherein
   the external rib member corresponds to the length of the outer lateral portion on the side of the holder and is formed to be single or multiple.
Clause 12. The rechargeable battery module as defined in any one of clauses 1 to 11, wherein
   the holder further comprises:
   a first holder for receiving one sides of battery cells spaced in the first direction and the second direction traversing each other; and
   a second holder for receiving other sides of the battery cells, and
   the first holder and the second holder are combined in a snap fit structure.
Clause 13. The rechargeable battery module as defined in clause 12, wherein
   the rib is formed on one side of one of the first holder and the second holder.
Clause 14. The rechargeable battery module as defined in any one of clauses 1 to 13, further comprising:
   a case for receiving a lower side of the holder,; and
   a cover for covering an upper side of the holder,
   wherein the cover comprises a rib facing the battery cell and corresponding to the same therein.
Clause 15. The rechargeable battery module as defined in clause 14, wherein
   the rib is formed to be a regular hexagon and is repeatedly disposed in the first direction and the second direction.

## Claims

1. A rechargeable battery module comprising:
a holder configured to receive or accommodate battery cells spaced from each other in a first direction and a second direction crossing the first direction;
tabs configured to electrically connect the battery cells to each other, at least one of the tabs having an inner planar portion and an inner lateral portion bent from the inner planar portion and fixed on a side of the holder; and
busbars configured to connect the tabs to a battery management system, at least one of the busbars having an outer lateral portion connected to the inner lateral portion of the tab and an outer planar portion bent from the outer lateral portion and spaced from the inner planar portion,
wherein the holder comprises a rib configured to fix at least one of the inner lateral portion of the tab and the outer lateral portion of the busbar.

2. The rechargeable battery module as claimed in claim 1, wherein the rib comprises:
an internal rib member open toward the inner lateral portion of the at least one of the tabs and combined to the inner lateral portion; and
an external rib member open toward the outer lateral portion of the at least one of the busbars and combined to the outer lateral portion.

3. The rechargeable battery module as claimed in claim 2, wherein the internal rib member and the external rib member are independently spaced from each other in the first direction and are integrally formed on a side of the holder.

4. The rechargeable battery module as claimed in claim 3, wherein the internal rib member forms an internal first gap on the side of the holder, and
wherein the external rib member forms a second gap that overlaps and is greater than the first gap.

5. The rechargeable battery module as claimed in any one of claims 2 to 4, wherein the tabs comprises:
a first tab member having an inner planar portion on a plane of the holder and configured to connect the battery cells to each other and an inner lateral portion bent from the inner planar portion and arranged on a side of the holder; and
a second tab member on an upper side and a lower side of the holder and configured to connect the battery cells, and
wherein the inner lateral portion of the first tab member is combined and fixed to the internal rib member.

6. The rechargeable battery module as claimed in claim 5, wherein the internal rib member is arranged on the side of the holder and has a first length that is less than a length of the inner lateral portion and combines and fixes part of the inner lateral portion.

7. The rechargeable battery module as claimed in claim 5 or claim 6, wherein the busbars comprise a first busbar member and a second busbar member,
wherein the second busbar member has:
an outer planar portion facing the inner planar portion of the first tab member; and
an outer lateral portion bent from the outer planar portion and facing the inner lateral portion of the first tab member to be connected to the same, and
wherein the outer lateral portion of the second busbar member is combined and fixed to the external rib member.

8. The rechargeable battery module as claimed in claim 7, wherein the outer lateral portion is combined to the external rib member and is adhered to the inner lateral portion to apply a pressure to a surface thereof.

9. The rechargeable battery module as claimed in claim 8, wherein the external rib member corresponds to a length of the outer lateral portion on a side of the holder and has a second length that is greater than the first length.

10. The rechargeable battery module as claimed in any one of claims 5 to 9, wherein a portion of the inner lateral portion that corresponds to the external rib member is combined and fixed by the outer lateral portion and the external rib member.

11. The rechargeable battery module as claimed in claim 8, wherein the external rib member corresponds to the length of the outer lateral portion on the side of the holder.

12. The rechargeable battery module as claimed in any one of the preceding claims, wherein the holder further comprises:
a first holder configured to accommodate one side of the battery cells; and
a second holder configured to accommodate an opposite side of the battery cells,
and
wherein the first holder and the second holder are combined in a snap fit configuration.

13. The rechargeable battery module as claimed in claim 12, wherein the rib is on one side of one of the first holder and the second holder.

14. The rechargeable battery module as claimed in any one of the preceding claims, further comprising:
a case accommodating a lower side of the holder; and
a cover covering an upper side of the holder,
wherein the cover comprises a rib facing and corresponding to the battery cells.

15. The rechargeable battery module as claimed in claim 14, wherein the rib has a regular hexagon pattern repeating in the first direction and the second direction.
